# EUROPEAN PATENT APPLICATION

(11) **EP 4 160 799 A1**
(43) Date of publication of application: **05.04.2023**
(21) Application number: 21940528.9
(22) Date of filing: 24.11.2021
(51) Int. Cl.: H01M 50/204

(54) **QUICK-CHANGE POWER BATTERY ASSEMBLY CAPABLE OF DELAYING HEAT DIFFUSION, AND ELECTRIC VEHICLE**

(30) Priority: 18.05.2021 CN 202110537656
(71) Applicant: China Faw Co., Ltd., Changchun, Jilin 130011 (CN)
(72) Inventor: LU, Jun, Changchun, Jilin 130011 (CN); SUN, Huanli, Changchun, Jilin 130011 (CN); XU, Lichao, Changchun, Jilin 130011 (CN); LIU, Peng, Changchun, Jilin 130011 (CN); SUN, Shijie, Changchun, Jilin 130011 (CN)
(74) Representative: DehnsGermany Partnerschaft von Patentanwälten
(86) International application number: PCT/CN2021/132665
(87) International publication number: WO 2022/242084

(57) **Abstract**

The present invention discloses a quick-swapping power battery assembly for delaying thermal diffusion, and an electric vehicle, and belongs to the technical field of thermal runaway of batteries. The quick-swapping power battery assembly includes at least one battery module arranged in an accommodating cavity of a lower box body assembly, wherein cross beams are respectively arranged on two sides of the battery module, and an integrated baffle and an elastic device are respectively arranged on two ends of the battery module. By means of the quick-swapping power battery assembly for delaying thermal diffusion, and the electric vehicle disclosed by the present invention, the quick swapping of the battery module can be realized, and time is saved. Furthermore, at the first time of thermal runaway of a battery, the hazardous battery module is separated from a full vehicle, thereby effectively ensuring the property safety of passengers, effectively delaying the thermal runaway of the battery, ensuring the safety of the battery assembly, realizing a lightweight design of the assembly, and reducing the costs of research and development.

## Description

### Technical Field

The present invention discloses a quick-swapping power battery assembly for delaying thermal diffusion, and an electric vehicle, and belongs to the technical field of thermal runaway of batteries.

### Background

At present, the development prospect of new energy vehicles is very broad. The new energy vehicles have the advantages of high energy efficiency, zero emission, no pollution, high specific energy, low noise, high reliability, and so on. As a main energy storage component of a new energy battery vehicle, a power battery system mainly has the functions of ensuring the driving of a full vehicle, meeting the power demands of high and low voltage components, recycling braking energy, adjusting the energy of a hybrid engine system, and the like. The safety of a power battery assembly has always been the key to its quality. With the rapid development of the demand for high-energy and high-power battery assemblies, a series of safety issues have arisen in the battery assemblies. Electric vehicles also have the problem of slow charging speeds. The general solution is to utilize a high-power charging or quick battery swapping solution. However, the current quick battery swapping solution has a complex structure and a slow speed.

### Summary

Some embodiments of the present invention solve the problems of a slow swapping speed of an existing battery modules and inability to ensure the safety of a battery assembly in the case of thermal runaway of a battery, and to propose a quick-swapping power battery assembly for delaying thermal diffusion, and an electric vehicle.

The problems to be solved by the present invention are implemented by the following technical solutions:
A quick-swapping power battery assembly for delaying thermal diffusion, including at least one battery module arranged in an accommodating cavity of a lower box body assembly, wherein cross beams are respectively arranged on both sides of each battery module, both ends of the two cross beams respectively support and match inner walls of side beams on the both sides of the accommodating cavity, and an integrated baffle and an elastic device are respectively arranged on the both ends of the each battery module.

In some embodiments, the each battery module includes at least one battery cell, two ends of the at least one battery cell is provided with end plates, the at least one battery cell and the end plates are fixed on an integrated liquid cooling plate, and both sides of the integrated liquid cooling plate are in slide connection with the cross beams.

In some embodiments, the each battery module includes at least two battery cells, and a thermal insulation pad is arranged between two adjacent battery cells.

In some embodiments, installation grooves are respectively provided on inner sides of the two cross beams, and the integrated liquid cooling plate is provided with installation guide rails on the both sides, the installation guide rails is configured to move along the installation grooves on the both sides.

In some embodiments, a plurality of cooling liquid flow channels are arranged in the integrated liquid cooling plate, a cooling liquid pipe is arranged on an end part of an outer side of the lower box body assembly, the cooling liquid pipe communicates with a cooling liquid channel arranged in a side beam of the lower box body assembly, a cooling liquid channel outlet is provided on the inner side of the side beam, the cooling liquid flow channel matches the cooling liquid channel outlet, and a cooling liquid circulates in the cooling liquid flow channel, the cooling liquid channel and the cooling liquid pipe.

In some embodiments, the at least one cooling liquid flow channel and the cooling liquid channel outlet are connected in a sealing manner through a gasket.

In some embodiments, sliding grooves are respectively provided on the inner sides of the two cross beams, and two ends of the integrated baffle is provided with sliding cylinders on, the sliding cylinders is movable along the sliding grooves.

In some embodiments, a strong magnetic strip is fixed on the integrated liquid cooling plate, the strong magnetic strip is arranged between the integrated baffle and the integrated liquid cooling plate, an inductive coil and an inductive sensor are arranged in the integrated baffle, and the inductive coil, the inductive sensor and the battery module are electrically connected to a vehicle-mounted BMS battery system.

In some embodiments, the elastic device is an elastic leaf spring, the elastic leaf spring is arc-shaped or wavy, and two sides of the elastic leaf spring are in line contact or surface contact with the end plate and the inner wall of the side beam respectively.

An electric vehicle, including a vehicle body and the quick-swapping power battery assembly for delaying thermal diffusion in any one of the above solutions.

Compared with the prior art, the present invention has the following beneficial effects:
The present invention discloses a quick-swapping power battery assembly for delaying thermal diffusion and an electric vehicle. When the inductive sensor arranged in the integrated baffle receives a pop-up signal sent by the vehicle-mounted BMS battery system, the inductive coil changes the current direction to generate a magnetic force opposite to the strong magnetic strip, and the integrated baffle will pop up along the sliding grooves on the both sides. At this time, the elastic device at the other end of the battery module will release huge elastic potential energy, so as to eject the battery module along the installation grooves, such that quick swapping of the battery module can be realized, and time is saved. Furthermore, at the first time of thermal runaway of the battery, the hazardous battery module is separated from the full vehicle, thereby effectively ensuring the property safety of passengers, effectively delaying the thermal runaway of the battery, ensuring the safety of the battery assembly, realizing a lightweight design of the assembly, and reducing the costs of research and development.

### Brief Description of the Drawings

Fig. 1 is an isometric view of a quick-swapping power battery assembly for delaying thermal diffusion of the present invention.
Fig. 2 is a schematic structural diagram of a lower box body assembly in a quick-swapping power battery assembly for delaying thermal diffusion of the present invention.
Fig. 3 is an isometric view of a battery module in a quick-swapping power battery assembly for delaying thermal diffusion of the present invention.
Fig. 4 is a partial isometric view of a quick-swapping power battery assembly for delaying thermal diffusion of the present invention.
Fig. 5 is an enlarged view of a position A of a quick-swapping power battery assembly for delaying thermal diffusion.
Fig. 6 is a partial structural schematic diagram of a quick-swapping power battery assembly for delaying thermal diffusion of the present invention.
Fig. 7 is an enlarged view of a position B of a quick-swapping power battery assembly for delaying thermal diffusion.
Fig. 8 is a schematic diagram of an electrical connection of a quick-swapping power battery assembly for delaying thermal diffusion.

1-lower box body assembly, 11-side beam, 12-cross beam, 121-installation groove, 122-sliding groove, 13-cooling liquid pipe, 2-battery module, 21-battery cell, 22-integrated liquid cooling plate, 221-installation guide rail, 222-cooling liquid flow channel, 23-thermal insulation pad, 24-fixing cable tie, 25-end plate, 3-integrated baffle, 31-sliding cylinder, 4-elastic device, 5-strong magnetic strip.

### Detailed Description of the Embodiments

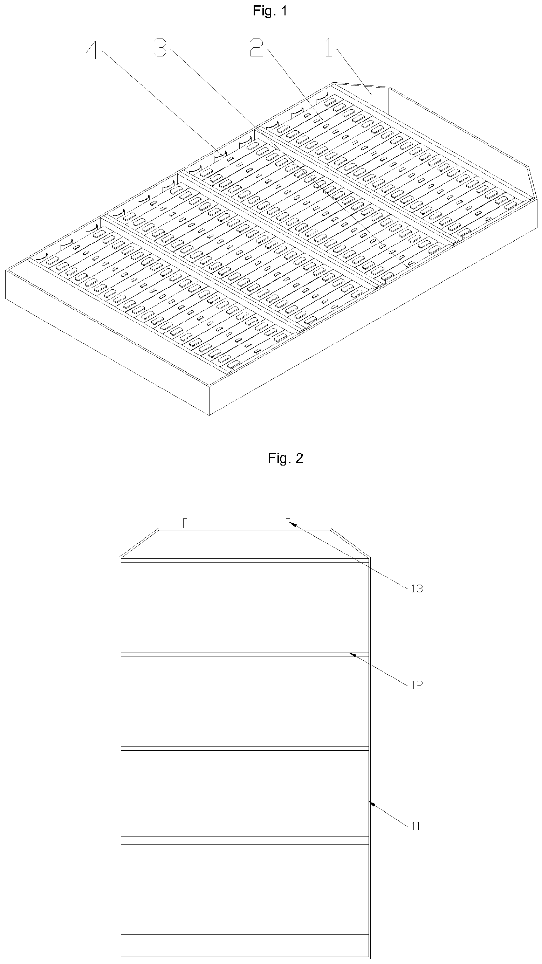

The present invention will be further described below according to Figs. 1-8:
A clear and complete description of technical solutions of the present invention will be given below, in combination with the drawings. Apparently, the embodiments described below are merely a part, but not all, of the embodiments of the present invention. All of other embodiments, obtained by those of ordinary skill in the art based on the embodiments of the present invention without any creative effort, fall into the protection scope of the present invention.

In the description of the present invention, it should be noted that orientation or position relationships indicated by terms "center", "upper", "lower", "left", "right", "vertical", "horizontal", "inside", "outside" and the like are generally orientation or position relationships shown on the basis of the drawings, and are merely for the convenience of describing the present invention and simplifying the description, but do not indicate or imply that the referred devices or elements must have specific orientations or must be constructed and operated in specific orientations, and thus cannot be construed as limitations to the present invention.

In the description of the present invention, it should be noted that the terms "installed", "connected" and "connection" should be understood in a broad sense, unless otherwise expressly specified and limited. For example, the connection can be a fixed connection, and can also be a detachable connection, or an integral connection; can be a mechanical connection, and can also be an electrical connection; and can be a direct connection, can be an indirect connection through an intermediate medium, and can also be internal communication between two elements. For those of ordinary skill in the art, the specific meanings of the above terms in the present invention can be understood in specific situations.

As shown in Fig. 1, a first embodiment of the present invention provides a quick-swapping power battery assembly for delaying thermal diffusion on the basis of the art known to inventors. The quick-swapping power battery assembly includes: a lower box body assembly 1, a battery module 2, an integrated baffle 3 and an elastic device 4. Specific structures and connection manners of the above-mentioned components will be introduced below one by one.

First, the lower box body assembly 1 is introduced. As shown in Fig. 2, an accommodating cavity is enclosed by side beams 11 and a bottom plate, at least one battery module 2 is installed in the accommodating cavity, four battery modules 2 are installed in the accommodating cavity in the present embodiment, cross beams 12 are respectively installed on both sides of each battery module 2, and both ends of the two cross beams 12 respectively support and match inner walls of the side beams 11 on the both sides of the accommodating cavity, so as to divide the space into four areas. In this way, the structural strength of a lower box body is ensured, and the modules are also spaced apart. Once the module in a certain area produces thermal runaway, the thermal runaway can be inside only within the present area within a short time and cannot be spread rapidly, thereby protecting the other battery modules 2. The integrated baffle 3 and the elastic device 4 are respectively installed on the both ends of the battery module 2, a cooling liquid pipe 13 is arranged on an end part of an outer side of the lower box body assembly 1, the cooling liquid pipe 13 communicates with a cooling liquid channel that is arranged in the side beam 11 of the lower box body assembly 1, and an inner side of the side beam 11 is provided with a cooling liquid channel outlet.

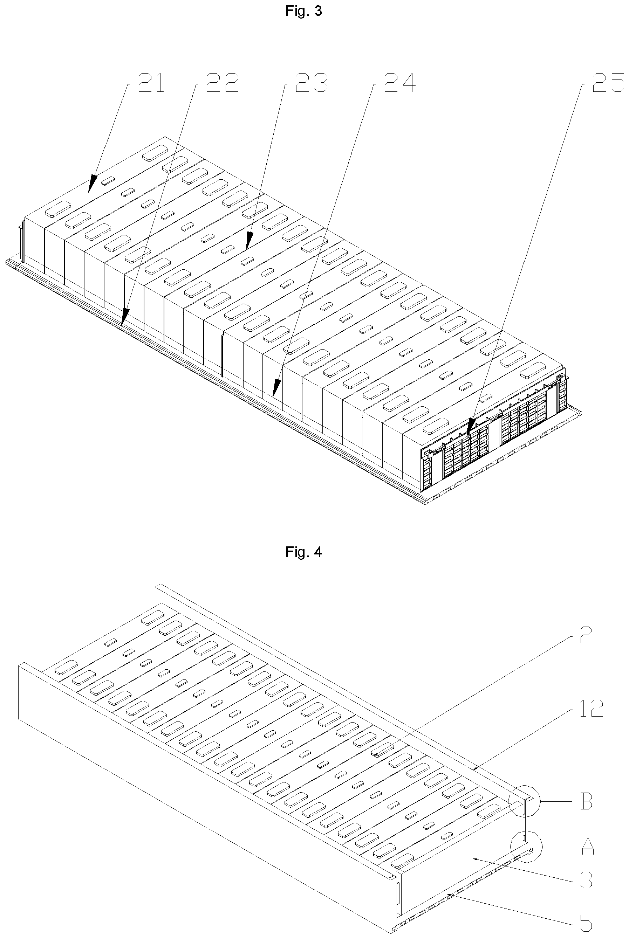

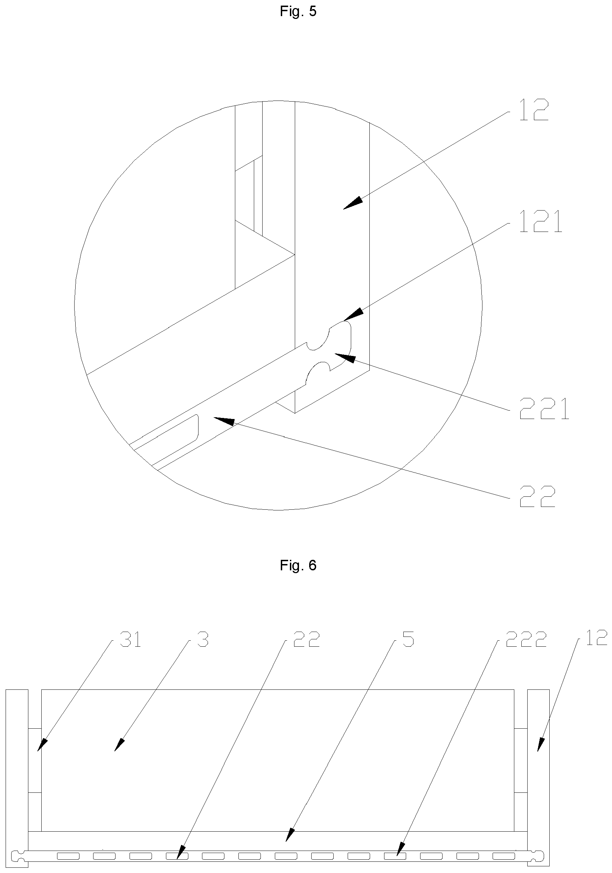

Next, the battery module 2 will be introduced. As shown in Figs. 3-4, the battery module 2 includes: battery cells 21, end plates 25 and an integrated liquid cooling plate 22. The battery module 2 includes at least two battery cells 21, and a thermal insulation pad 23 is bonded between two adjacent battery cells 21. By adjusting the number of the battery cells 21, module solution designs of different lengths can be realized. The module size includes, but is not limited to, 590mm-1300mm. The end plates 25 are fixed on the both ends of the battery cell 21 by bonding and are tightened with a cable tie 24, and then the entirety is bonded on the integrated liquid cooling plate 22. The both sides of the integrated liquid cooling plate 22 are in slide connection with the cross beams 12. The thermal insulation pad 23 is made of a non-metallic material, including, but not limited to, aerogel, rubber, etc, therefore when the module expands, the thermal insulation pad can absorb a large amount of energy and be compressed, so as to ensure the normal expansion of the module. As shown in Fig. 5, installation grooves 121 are respectively provided on the inner sides of the two cross beams 12, and the integrated liquid cooling plate 22 is provided with installation guide rails 221 on the both sides, so as to move along the installation grooves 121 on the both sides.

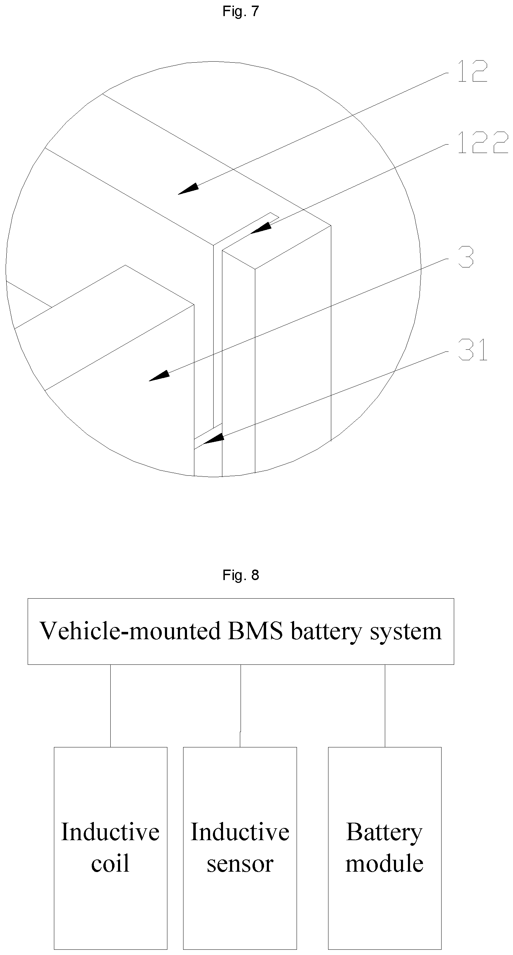

As shown in Fig. 6, a plurality of cooling liquid flow channels 222 are arranged in the integrated liquid cooling plate 22, the integrated liquid cooling plate 2 employs a porous micro-channel profile structure, and is made of, but is not limited to, aluminum alloy, titanium alloy, iron alloy and other high-strength and easy-to-form materials. After being connected to a thermal management system, cooling liquid circulates in the integrated liquid cooling plate, thereby not only realizing the heating and cooling of the battery module 2, but also realizing the fixing safety of the battery module, reducing the weight of the lower box body assembly, and realizing a lightweight design of the battery module. The cooling liquid flow channel 222 matches the cooling liquid channel outlet on the inner side of the side beam 11, therefore the connection of the thermal management system in the battery module 2 is realized. The cooling liquid circulates in the cooling liquid flow channel 222, the cooling liquid channel and the cooling liquid pipe 13, and the cooling liquid flow channel 222 and the cooling liquid channel outlet are connected in a sealing manner through a gasket. When the thermal management system is not working, the internal cooling liquid can play a heat preservation function. The specific heat capacity of the cooling liquid is greater than or equal to 3300J/(kg*K), which can effectively block the influence of an external temperature on the interior of the battery pack and reduce energy consumption. As shown in Fig. 7, sliding grooves 122 are respectively provided on inner sides of the two cross beams 12, and the integrated baffle 3 is provided with sliding cylinders 31 on the both ends, so as to move along the sliding grooves 122 on the both sides. The elastic device 4 is an elastic leaf spring, the elastic leaf spring is arc-shaped or wavy, and is made of, but is not limited to, stainless steel, high-speed steel and other high-strength materials, and both sides of the elastic leaf spring are in line contact or surface contact with the end plate and the inner wall of the side beam 11 respectively. The elastic leaf spring at an end of the battery module 2 and the integrated baffle 3 at the other end of the battery module 2 compress the battery module 2, and after the battery module 2 expands, relatively large potential energy is generated to further compress the elastic leaf spring, so as to ensure the normal expansion of the module.

In some embodiments of the invention, a strong magnetic strip 5 is fixed on the integrated liquid cooling plate 22 by bonding, the strong magnetic strip 5 is an Flex-10 rubber magnetic strip, the strong magnetic strip 5 is installed between the integrated baffle 3 and the integrated liquid cooling plate 22, an inductive coil and an inductive sensor are arranged in the integrated baffle 3, and as shown in Fig. 8, the inductive coil, the inductive sensor and the battery module 2 are electrically connected to a vehicle-mounted BMS battery system.

The present invention further provides an electric vehicle, including a vehicle body and a quick-swapping power battery assembly for delaying thermal diffusion, wherein the quick-swapping power battery assembly for delaying thermal diffusion is installed on the vehicle body.

### Specific working manner:

The battery module 2 is installed in the lower box body assembly 1, the battery module 2 is squeezed and fixed by the integrated baffle 3 and the elastic device 4, the inductive coil and the inductive sensor in the integrated baffle 3 are powered on to work, and the integrated baffle 3 and the strong magnetic strip 5 attract each other under the action of current in the inductive coil. When the battery produces thermal runaway, the battery module will explode and burn violently, or when quick swapping of the battery module 2 is required, the inductive sensor arranged in the integrated baffle 3 receives a pop-up signal sent by the battery BMS, the inductive coil changes the current direction to generate a magnetic force opposite to the strong magnetic strip, and the integrated baffle 3 will pop up along the sliding grooves 122 on the both sides. At this time, the elastic device 4 at the other end of the battery module 2 will release huge elastic potential energy, so as to eject the battery module 2 along the installation grooves 121, such that quick swapping of the battery module can be realized, and time is saved. Furthermore, at the first time of thermal runaway of the battery, the hazardous battery module is separated from the full vehicle, thereby effectively ensuring the property safety of passengers, effectively delaying the thermal runaway of the battery, ensuring the safety of the battery assembly, realizing a lightweight design of the assembly, and reducing the costs of research and development.

Although the embodiments of the present invention have been disclosed above, they are not limited to the applications set forth in the specification and embodiments. It can be fully adapted to various fields suitable for the present invention. Additional modifications can readily be implemented by those skilled in the art. Therefore, the present invention is not limited to specific details and illustrations shown and described herein without departing from general concepts defined by the scope of claims and equivalents.

## Claims

1. A quick-swapping power battery assembly for delaying thermal diffusion, comprising at least one battery module (2) arranged in an accommodating cavity of a lower box body assembly (1), wherein cross beams (12) are respectively arranged on both sides of each battery module (2), both ends of the two cross beams (12) respectively support and match inner walls of side beams (11) on both sides of the accommodating cavity, and an integrated baffle (3) and an elastic device (4) are respectively arranged on the both ends of the each battery module (2).

2. The quick-swapping power battery assembly for delaying thermal diffusion as claimed in claim 1, wherein the each battery module (2) comprises at least one battery cell (21) , two ends of the at least one battery cell is provided with end plates (25), the at least one battery cell (21) and the end plates (25) are fixed on an integrated liquid cooling plate (22), and both sides of the integrated liquid cooling plate (22) are in slide connection with the cross beams (12).

3. The quick-swapping power battery assembly for delaying thermal diffusion as claimed in claim 2, wherein the each battery module (2) comprise at least two battery cells (21), and a thermal insulation pad (23) is arranged between two adjacent battery cells (21).

4. The quick-swapping power battery assembly for delaying thermal diffusion as claimed in claim 2 or 3, wherein installation grooves (121) are respectively provided on inner sides of the two cross beams (12), and the integrated liquid cooling plate (22) is provided with installation guide rails (221) on the both sides, the installation guide rails is configured to move along the installation grooves (121).

5. The quick-swapping power battery assembly for delaying thermal diffusion as claimed in claim 4, wherein a plurality of cooling liquid flow channels (222) are arranged in the integrated liquid cooling plate (22), a cooling liquid pipe (13) is arranged on an end part of an outer side of the lower box body assembly (1), the cooling liquid pipe (13) communicates with a cooling liquid channel arranged in a side beam (11) of the lower box body assembly (1), a cooling liquid channel outlet is provided on an inner side of the side beam (11), the at least one cooling liquid flow channel (222) matches the cooling liquid channel outlet, and a cooling liquid circulates in the cooling liquid flow channel (222), the cooling liquid channel and the cooling liquid pipe (13).

6. The quick-swapping power battery assembly for delaying thermal diffusion as claimed in claim 5, wherein the at least one cooling liquid flow channel (222) and the cooling liquid channel outlet are connected in a sealing manner through a gasket.

7. The quick-swapping power battery assembly for delaying thermal diffusion as claimed in claim 5 or 6, wherein sliding grooves (122) are respectively provided on the inner sides of the two cross beams (12), and two ends of the integrated baffle (3) is provided with sliding cylinders (31), the sliding cylinders (31) is movable along the sliding grooves (122).

8. The quick-swapping power battery assembly for delaying thermal diffusion as claimed in claim 7, wherein a strong magnetic strip (5) is fixed on the integrated liquid cooling plate (22), the strong magnetic strip (5) is arranged between the integrated baffle (3) and the integrated liquid cooling plate (22), an inductive coil and an inductive sensor are arranged in the integrated baffle (3), and the inductive coil, the inductive sensor and the battery module (2) are electrically connected to a vehicle-mounted BMS battery system.

9. The quick-swapping power battery assembly for delaying thermal diffusion as claimed in claim 8, wherein the elastic device (4) is an elastic leaf spring, the elastic leaf spring is arc-shaped or wavy, and two sides of the elastic leaf spring are in line contact or surface contact with the end plate and the inner wall of the side beam respectively.

10. An electric vehicle, comprising a vehicle body and the quick-swapping power battery assembly for delaying thermal diffusion as claimed in any one of claims 1-9.
